# EUROPÄISCHE PATENTSCHRIFT

(11) **EP 2 631 335 B1**
(45) Veröffentlichungstag und Bekanntmachung des Hinweises auf die Patenterteilung: **19.04.2017**
(21) Anmeldenummer: 13155636.7
(22) Anmeldetag: 18.02.2013
(51) Int. Cl.: C25B 11/00, C25B 11/04, C02F 1/461

(54) **Verfahren zur Herstellung einer Elektrode**
Method for producing an electrode
Procédé de fabrication d'une électrode

(30) Priorität: 22.02.2012 AT 500372012
(43) Veröffentlichungstag der Anmeldung: 28.08.2013
(73) Patentinhaber: pro aqua Diamantelektroden Produktion GmbH & Co KG, 8712 Niklasdorf (AT)
(72) Erfinder: Schelch, Michael, 8600 Oberaich (AT); Staber, Wolfgang, 8600 Bruck an der Mur (AT); Hermann, Robert, 8600 Oberaich (AT); Wesner, Wolfgang, 1220 Wien (AT)
(74) Vertreter: Vinazzer, Edith

(56) Entgegenhaltungen:
- EP-A1- 2 589 684
- WO-A1-2011/008322
- WO-A2-2007/116004
- JP-A- 2005 272 908
- JP-A- 2005 272 910

## Beschreibung

Die Erfindung betrifft ein Verfahren zur Herstellung einer Elektrode, welche elektrisch leitfähige Partikel, insbesondere dotierte Diamantpartikel oder dotierte TiO₂-Kristallpartikel aufweist, die einlagig in einer Kunststoff-Trägerschicht eingebettet sind und beidseitig dieser Schicht herausragen, wobei eine erste und eine zweite Hilfsschicht aus einem weichen, nachgiebigen Material mit Folien aus Kunststoff und ggf. zumindest einer Stützschicht kontinuierlich zu einem mehrlagigen Material zusammengefügt werden, und wobei der Kunststoff der Folien aufgeschmolzen wird und die Partikel an beiden Außenseiten der aus den Folien entstandenen Trägerschicht freigelegt werden.

Ein derartiges Verfahren ist aus der WO 2007/116004 A2 bekannt. Als elektrisch leitfähige Partikel sind dotierte Diamantpartikel vorgesehen, welche zwischen zwei Kunststofffolien eingebracht sind, wobei die Partikel durch Erhitzen bzw. Aufschmelzen der beiden Folien unter äußerem Druck an den Folienaußenseiten freigelegt werden. Das in einer Pressform durchzuführende Verfahren schränkt die Produktionskapazität deutlich ein, da der Pressvorgang jeweils lange Zeit in Anspruch nimmt. Darüber hinaus ist die Größe der herzustellenden Elektroden begrenzt.

Der Erfindung liegt die Aufgabe zugrunde, ein Verfahren zur Verfügung zu stellen, mit welchem qualitativ hochwertige Elektroden bei hoher Produktionskapazität herstellbar sind.

Gelöst wird die gestellte Aufgabe erfindungsgemäß dadurch, dass von Rollen abgewickelte Hilfsschichtbahnen und Folienbahnen jeweils über eine Rolle geführt und zusammengefügt werden, wobei beide Folienbahnen auf den Hilfsschichtbahnen positioniert werden, die eine Folienbahn oberhalb der anderen,
wobei auf die obere Folienbahn über eine Streueinrichtung die Partikel anhaftend aufgebracht werden,
wobei beim Transport der oberen Folienbahn über weitere Rollen diese Folienbahn in eine zur Hilfsschichtbahn umgekehrte Lage gebracht wird und beim Transport der oberen Folienbahn über die eine weitere Rolle die überschüssigen Partikel in einen Auffangbehälter fallen,
und wobei anschließend diese Folienbahn mit der zweiten mit einer Hilfsschicht zusammengefügten Folienbahn zusammengeführt wird und das mehrlagige Material in eine Doppelbandpresse oder einen Kalander transportiert und dort Druck und Wärme ausgesetzt wird, und wobei nach dem Austritt aus der Doppelbandpresse oder dem Kalander die Hilfsschichten entfernt werden und der abgekühlte Materialverbund zu Elektroden geschnitten wird.

Die Erfindung stellt daher einen kontinuierlichen Herstellprozess zur Verfügung, welcher es gestattet, die Elektroden mit hoher Produktionskapazität und in hoher Qualität herzustellen.

Auf besonders einfache und zweckmäßige Weise lassen sich die Partikel mittels einer Streueinrichtung auf die Folienbahn aufbringen. Diese Streueinrichtung kann in an sich bekannter Weise ausgeführt sein und einen Vorratsbehälter für die Partikel umfassen. Sie kann ferner von der zentralen Steuerung der Vorrichtung hinsichtlich der Menge der auf die Folienbahn zu streuenden Partikel entsprechend gesteuert werden. Die Streueinrichtung gestattet ferner ein Aufbringen der Partikel über die gesamte Breite der Folienbahn.

Die Partikel sollen möglichst einlagig und weitgehend ohne gegenseitigen Kontakt auf die Folienbahn aufgebracht werden und auf dieser, bis sie mit der zweiten Folienbahn zusammengefügt wird, haften. Auf eine besonders elegante und einfache Weise wird eine Haftung der Partikel durch eine elektrostatische Aufladung der Partikel und der Folienbahn, mittels eines geeigneten Generators, erzielt. Damit wird eine Haftung der unmittelbar mit der Folienbahn in Kontakt stehenden Partikel erreicht, die überschüssigen, nicht haftenden Partikel können beispielsweise abgesaugt oder beim Weitertransport der Folienbahn über eine Walze, Rolle oder dergleichen abfallen und in einem Behälter aufgefangen werden. Alternativ kann eine Haftung der Partikel auf der Folienbahn durch das vorherige Aufbringen einer Klebeschicht auf der Folienbahn erfolgen. Mit der Folienbahn nicht in Kontakt stehende Partikel können, wie beschrieben, entfernt werden.

Das in ein oder mehreren Lagen eingebrachte Stützmaterial ist bevorzugt ein Gitter oder ein Gewebe, welches zwischen der Folienbahn bzw. zumindest einer der Folienbahnen und der dieser benachbarten Hilfsschicht oder an der Außenseite zumindest einer der Hilfsschichten oder zwischen den Folienbahnen positioniert wird. Die Ausführung als Gitter oder Gewebe hat den Vorteil, dass die Partikel - die Diamantpartikel oder die TiO₂-Kristallpartikel - beim Aufschmelzen des Folienmaterials die Stützschicht bzw. die Stützschichten durchdringen können und so an beiden Seiten der gebildeten Trägerschicht herausragen. Das Material für die Stützschicht bzw. die Stützschichten soll einen höheren Schmelzpunkt aufweisen als das Folienmaterial, um ein Schmelzen der Stützschichten beim Aufschmelzen der Folien zu vermeiden.

Werden zur Herstellung der Elektrode Diamantpartikel verwendet, so können diese insbesondere Einkristalle und sogenannte Industriediamanten mit bevorzugten Korngrößen zwischen 160 µm und 350 µm sein.

TiO₂-Kristallpartike werden bevorzugt mit Korngrößen zwischen 300 µm und bis zu 5 mm, insbesondere bis zu 2 mm, verwendet.

Die Stärke der Folien wird auf die durchschnittlichen Korngrößen der Partikel abgestimmt und beträgt üblicherweise zwischen 12,5 µm und 250 µm. Für eine gute Stabilität der fertigen Elektrode sowie ein optimales Freilegen der Partikel während des Press- oder Walzvorganges ist es gemäß der Erfindung vorteilhaft, wenn das Verhältnis der durchschnittlichen Korngrößen der eingesetzten Partikel zur Summe der Stärken der verwendeten Folienbahnene zwischen 3,9 und 9,0, insbesondere bis zu 6,0, beträgt.

### Weitere Merkmale, Vorteile und Einzelheiten der Erfindung werden nun anhand der schematischen Zeichnung, die Ausführungsbeispiele darstellt, näher beschrieben. Dabei zeigen

Fig. 1 eine Schnittdarstellung eines Abschnittes einer nach dem erfindungsgemäßen Verfahren hergestellten Elektrode,
Fig. 2 eine Schnittansicht während der Herstellung der Elektrode und
Fig. 3 und Fig. 4 (nicht erfindungsgemäß) Funktionsprinzipien der Herstellung der Elektrode unter Verwendung einer Doppelbandpresse.

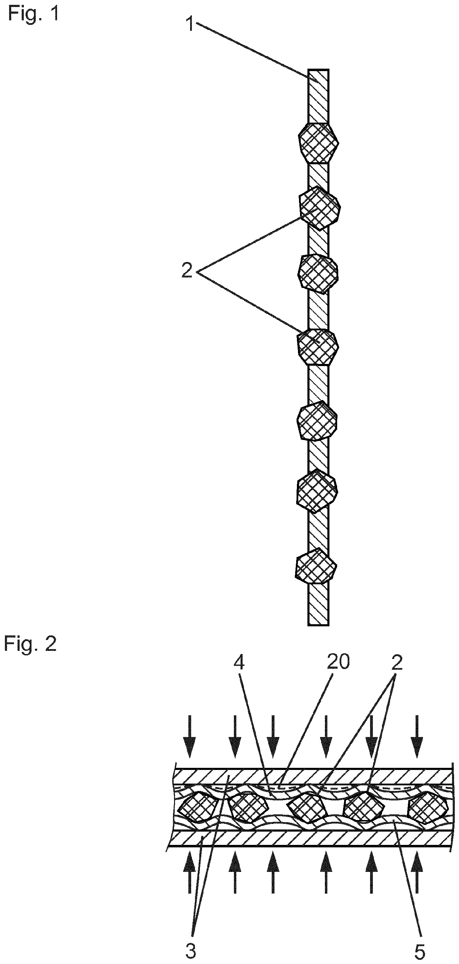

Die Erfindung befasst sich mit einem Verfahren zur Herstellung einer Elektrode für eine elektrochemische Zelle (Elektrolysezelle). Die Elektrode besteht, wie es Fig. 1 zeigt, aus elektrisch leitfähigen Partikeln 2, welche einlagig und ohne gegenseitigen Kontakt in eine Kunststoff-Trägerschicht 1 eingebettet sind, beidseitig aus der Trägerschicht 1 etwas herausragen und derart teilweise freigelegt sind. Die Partikel 2 sind entweder dotierte Diamantpartikel oder dotierte TiO₂-Einkristalle. Die Diamantpartikel sind insbesondere in einem Hochdruck/Hochtemperaturverfahren hergestellte, vorzugsweise mit Bor, aber auch mit Stickstoff, Phosphor, Arsen, Antimon, Niob, Lithium, Schwefel oder Sauerstoff dotierte Industriediamanten (Einkristalle). Die dotierten TiO₂-Kristalle können gemäß einem der bekannten Verfahren zur Kristallzüchtung aus einer Schmelze hergestellt sein, beispielsweise gemäß dem Verfahren von Bridgman-Stockbarger. Die TiO₂-Kristalle können kleine gezüchtete Einkristalle oder Partikel von größeren gezüchteten Kristallen sein, wobei diese entsprechend zerkleinert, beispielsweise geschnitten, werden. Die Dotierung erfolgt im Ausgangsmaterial oder während der Kristallzüchtung in der Schmelze. Zur Dotierung kommt eine Vielzahl von Elementen in Frage, beispielsweise Lithium, Niob, Aluminium, Phosphor, Gallium, Bor, Arsen, Indium, Germanium, Iridium, Ruthenium, Rhodium, Antimon, Stickstoff, Mangan, Eisen, Kobalt, Nickel, Chrom oder Yttrium oder die Oxide oder die Fluoride der genannten Elemente. Besonders geeignet sind Iridium oder Ruthenium.

Die Partikel 2 weisen Korngrößen zwischen etwa 100 µm bis einige Millimeter, insbesondere bis zu 5 mm, auf. Zur Herstellung von Elektroden nach dem erfindungsgemäßen Verfahren eignen sich insbesondere Diamantpartikel mit Korngrößen zwischen 160 µm und 350 µm und TiO₂-Partikel mit Korngrößen zwischen 300 µm und 5 mm, insbesondere bis zu 2mm. Für die Herstellung einer bestimmten Elektrode werden im Wesentlichen gleich große Partikel 2 und zwar Partikel 2 eines Korngrößenbereiches, beispielsweise Diamantpartikel der Körnung 160 µm/180µm, wie noch beschrieben wird, verwendet.

Bei einer bevorzugten Ausführungsform der Erfindung wird die Trägerschicht 1 aus zwei Folien 4, 5 aus chemisch stabilen Polymeren hergestellt, insbesondere aus Polytetrafluorethylen (Teflon), Polyvinylidenfluorid (PVDF), Perfluoralkoxylalkan (PFA), fluoriertem Ethylenpropylen (FEP), Ethylen-Tetrafluorethylen (ETFE), Polyetheretherketon (PEEK), Polyethylen (PE), Polypropylen (PP), Polyvinylchlorid (PVC) oder Polyphenylensulfid (PPS). Es werden zwei Folien 4, 5 aus dem gleichen Material mit Stärken von 12,5 µm bis 250 µm verwendet. Die Stärke der Folien 4,5 richtet sich nach der Größe der Partikel 2. Jede Folie 4, 5 wird auf eine dünne Hilfschicht 3 aus einem weichen, nachgiebigen Material aufgelegt. Die Dicke der Hilfschichten 3 beträgt insbesondere zwischen 0,5 mm und 3 mm. Als Material für die Hilfschichten 3 kommen beispielsweise Teflon (Polytetrafluorethylen), Viton und Kapton (Fluorelastomere der Firma DuPont), Neopren (Chloropren-Kauschuk oder Polychloropren oder Chlorbutadien-Kautschuk), thermoplastische Vulkanisate (TPV), Fluorkautschuke, beispielsweise Copolymere von Vinylidenfluorid (VDF) und Hexafluorpropylen (HFP) und Terpolymere von VDF, HFP und Tetrafluorethylen (TFE), ferner fluorierte Elastomere, wie beispielsweise Perfluorkautschuk (FFKM), Tetrafluorethylen/Propylen-Kautschuke (FEPM) und fluorierter Silikonkautschuk (VQM), sowie Silikone, aber auch Graphit oder Metalle wie beispielsweise Blei, Aluminium oder Kupfer in Frage. Die Hilfsschichten 3 werden ebenso wie die Folien 4, 5 vorzugsweise als Rollenware angeliefert und verwendet, alternativ auch als Platten. Fig. 2 zeigt den diesbezüglichen Aufbau während der Herstellung der Elektrode mit zwei Folien 4, 5, den dazwischen befindlichen Partikeln 2 und den jeweils auf die Außenseiten der Folien 4, 5 befindlichen Hilfsschichten 3.

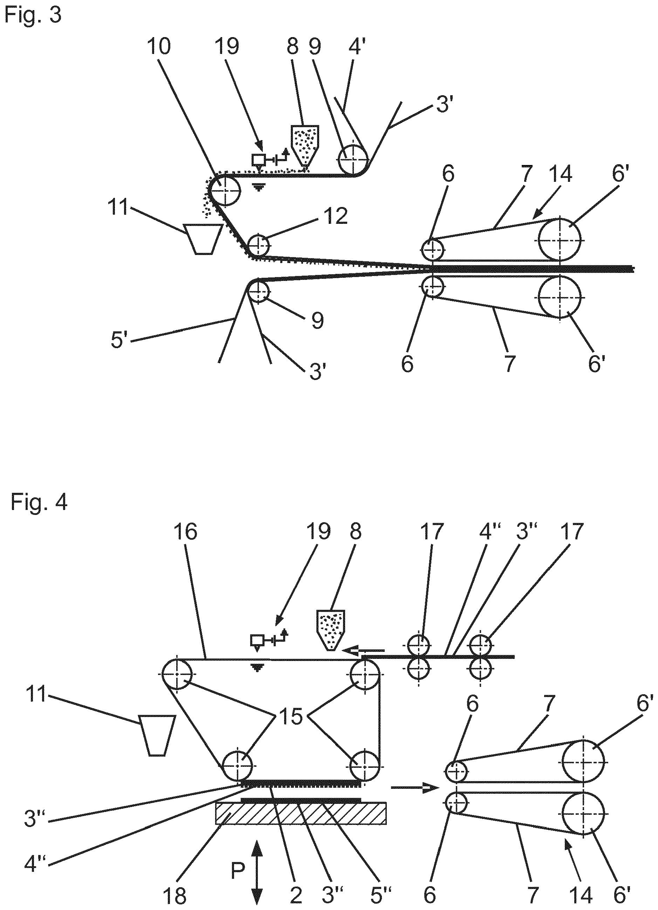

Fig. 3 und Fig. 4 (nicht erfindungsgemäß) zeigen schematisch Möglichkeiten der Herstellung der Elektrode unter Verwendung einer Doppelbandpresse 14. Doppelbandpressen sind in unterschiedlichen Ausführungen bekannt und bestehen beispielsweise aus zwei jeweils auf zwei Rollen 6, 6' gelagerten in sich geschlossenen parallel zueinander ausgerichteten Bändern 7, insbesondere aus Edelstahl. Zwischen dem oberen und dem unteren Band 7 ist ein Spalt, dessen Breite eingestellt werden kann. Das zu verpressende Material wird in den Spalt eingeführt bzw. eingespannt, sodass das Material zwischen den mit der gewünschten Geschwindigkeit in die gleiche Richtung laufenden Bändern 7 durch die Presse 14 gezogen wird. Dabei wird gleichzeitig auf das Material in der Presse 14 senkrecht von beiden Seiten in bekannter Weise Druck ausgeübt. Die das zu verpressende Material in die Doppelbandpresse 14 transportierende(n) Fördereinrichtung(en) ist/sind nicht dargestellt. Bei der in Fig. 3 dargestellten Variante werden von nicht gezeigten Rollen abgewickelte Hilfsschichtbahnen 3' und Folienbahnen 4', 5' jeweils über eine Rolle 9 geführt und derart zusammengefügt. Auf die in Fig. 3 obere Folienbahn 4' werden über eine Streueinrichtung 8 die Partikel 2 aufgebracht. Ein Generator 19 sorgt anschließend für eine elektrostatische Aufladung der Folienbahn 4' und der Partikel 2 und derart für eine elektrostatische Haftung der mit der Folienbahn 4' in Kontakt stehenden Partikel 2. Die überschüssigen Partikel 2 fallen beim Transport der auf der Hilfsschichtbahn 3' befindlichen Folienbahn 4' über eine weitere Rolle 10 in einen Auffangbehälter 11. Eine weitere Rolle 12 führt die Folienbahnen 4', 5' beim Eintritt in die Doppelbandpresse 14 zusammen. In der Doppelbandpresse 14 werden die Materialschichten Druck und Hitze ausgesetzt, sodass die Folienbahnen 4', 5' aufschmelzen und miteinander fest verbunden werden. Dabei dringen die Partikel 2 infolge der außenseitig befindlichen weichen Hilfsschichten 3' an beiden Seiten teilweise durch das Folienmaterial und werden an den Außenseiten des Folienmaterials jeweils teilweise freigelegt. Der aus der Doppelbandpresse 14 austretende Materialverbund wird optional gekühlt und die Hilfsschichtbahnen 3' werden abgezogen. Die "Elektrodenbahn" wird zu Elektroden gewünschter Größe geschnitten.

Fig. 4 zeigt eine nicht erfindungsgemäße Ausführungsform, bei der die Folien als Folienplatten 4", 5" verwendet werden. Auf ein auf Rollen 15 gelagertes, endloses Transportband 16 werden Materialstücke aus der Hilfsschichtbahn 3", welche beispielsweise als Rollenware vorliegt, und der Folienplatte 4" abgelegt. Die Materialstücke können beispielsweise zwischen Rollen- und Walzenpaaren 17 erstellt werden, die Hilfsschichtbahn 3" wird entsprechend der Größe der Folienplatten 4", 5" geschnitten. Ein Materialstück aus Folienplatte 5 " und Hilfsschicht 3 " wird auf einer Hilfseinrichtung 18 abgelegt, die in Richtung des Doppelpfeiles P bewegbar ist. Auf den am Transportband 16 abgelegten Verbund aus Folienplatte 4" und Hilfsschicht 3" werden über eine Streueinrichtung 8 die Partikel 2 aufgebracht. Ein Generator 19 sorgt für die elektrostatische Aufladung der Partikel 2 und der Folienplatte 4", sodass die in Kontakt mit der Folienplatte 4" stehenden Partikel 2 auf der Folienplatte 4" haften. Das Transportband 16 transportiert das Materialstück derart, dass die überschüssigen Partikel 2 abfallen und in einem Auffangbehälter 11 gesammelt werden können. An sich bekannte, nicht dargestellte Saugeinrichtungen sorgen für ein Haften des Materialstückes am Transportbund 16, bis dieses mit dem zweiten, auf der Hilfseinrichtung 18 befindlichen Materialstück zusammengefügt wird. Dieses Material aus Folienstücken 4", 5", Partikeln 2 und Hilfsschichten 3" wird in und durch die Doppelbandpresse 14 transportiert und, wie oben beschrieben, verschmolzen.

Das Material der Hilfsschichtbahnen 3', 3" wird derart gewählt und an das Material der Folienbahnen 4', 5' bzw. Folienplatten 4", 5" angepasst, dass die Hilfsschichtbahnen 3', 3" einen höheren Schmelzpunkt aufweisen als die Folienbahnen 4', 5' bzw. Folienplatten 4", 5" und beim Pressvorgang nicht schmelzen.

Anstelle von zwei Folienbahnen oder zwei Folienplatten kann in einer nicht erfindungsgemäßen Ausführungsform zur Herstellung der Elektroden auch nur eine Folienbahn oder eine Folienplatte verwendet werden. Bei der in Fig. 3 gezeigten Ausführungsform würde nur die Folienbahn 4' vorliegen, die Folienbahn 5' entfällt. Bei der in Fig. 4 gezeigten Ausführungsform würde nur eine, etwa die Folienplatte 4" vorliegen, auf die Hilfseinrichtung 18 wird nur die eine Hilfsschichtplatte positioniert. Ansonsten verlaufen die Herstellverfahren analog zu den Beschriebenen ab, wobei in der Doppelbandpresse die Partikel die aufschmelzende Folienschicht durchdringen und daher schließlich an beiden Seiten aus dem ursprünglich einlagigen Folienmaterial heraus ragen.

Die Partikel 2 sollen beim Herstellverfahren einlagig und zumindest weitgehend ohne gegenseitigen Kontakt auf eine der Folien oder auf der Folie anhaftend aufgebracht werden. Anstelle einer elektrostatischen Aufladung, wie beschrieben, kann auf die Folienseite, auf welcher die Partikel aufgebracht werden, eine Klebeschicht, beispielsweise aus einem Kleber, aufgebracht werden, an welcher die Partikel 2 gut bzw. ausreichend anhaften.

Wie es Fig. 2 zeigt, kann zur Erhöhung der mechanischen Festigkeit der hergestellten Elektroden entweder zwischen zumindest einer der Folien 4, 5 und der jeweiligen Hilfsschicht 3 oder zwischen der einzigen Folie und zumindest einer Hilfsschicht oder zwischen den Folien 4, 5 eine Stützschicht 20, ein- oder mehrlagig, welche als Stützgitter oder Stützgewebe oder dergleichen ausgeführt ist, eingebracht werden. Die Partikel 2 durchdringen während des Pressvorganges auch das Stützgitter bzw. Stützgewebe 20. Alternativ ist es möglich, ein Stützgitter oder Stützgewebe 20 auf der bereits hergestellten Elektrode auf eine Außenseite oder auf beide Außenseiten aufzubringen, beispielsweise aufzulaminieren oder aufzukleben. Als Material für das Stützgitter bzw. das Stützgewebe 20 eignen sich Kunststoffe, wie Polytetrafluorethylen (Teflon), Polyvinylidenfluorid (PVDF), Perfluoralkoxylalkan (PFA), fluoriertes Ethylenprophylen (FEP), Ethylen-Tetrafluorethylen (ETFE), Polyetheretherketon (PEEK) oder Polyphenylensulfid (PPS), Glasfasern, kunststoffbeschichtete Glasfasern, Keramiken oder Metalle.

Das Material für die Stützschicht(en) 20 wird auf das Material der Folien 4, 5 bezüglich des Schmelzpunktes abgestimmt, sodass die Stützschicht(en) beim Aufschmelzen der Folien 4, 5 nicht schmelzen.

Für eine gute Stabilität der hergestellten Elektrode sowie ein optimales Freilegen der Partikel 2 während des Pressvorganges ist es gemäß der Erfindung vorteilhaft, die Korngrößen der Partikel 2 auf die Folienstärken der Folien 4, 5 auf besondere Weise abzustimmen. Das Verhältnis der durchschnittlichen Korngrößen (Partikelkörnung) der eingesetzten Partikel 2 zur Summe der Stärken der verwendeten Folien 4, 5 (Folienbahnen 4', 5', Folienplatten 4", 5 ") oder zur Stärke der verwendeten Folie, falls nur eine eingesetzt wird, sollte gemäß der Erfindung zwischen 3,9 und 9,0, insbesondere bis zu 6,0 betragen. Es können Folien 4, 5 mit unterschiedlicher Stärke verwendet werden, beispielsweise kann eine Folie 4, 5 einer Stärke von 25 µm in Kombination mit einer Folie 4, 5 einer Stärke von 50 µm verwendet werden.

Der in der Doppelbandpresse 14 aufgebrachte Flächendruck beträgt zwischen 50 N/cm² und 500 N/cm², vorzugsweise zwischen 100 N/cm² und 300 N/cm².

Alternativ zu Folien 4, 5 kann in einer nicht erfindungsgemäßen Ausführungsform das Kunststoffmaterial als Kunststoffgranulat (PTFE) eingesetzt werden, welches analog zur oben beschriebenen Ausführungsform in einer Doppelbandpresse mit den Partikeln 2 verbunden sind. Es wird ein Gemisch aus dem Kunststoffgranulat und den Partikeln 2 auf eine auf einer Fördereinrichtung positionierte Hilfsschichtbahn aufgebracht, anschließend eine zweite Hilfsschichtbahn aufgelegt und der derart hergestellte Materialverbund in der Doppelbandpresse Hitze und Druck ausgesetzt, sodass das Kunststoffgranulat zur Trägerschicht verschmilzt und die Partikel an beiden Seiten dieser Schicht freigelegt werden.

Zum Aufschmelzen der Folien kann anstelle einer Doppelbandpresse ein Kalander, wie ein Walzenkalander verwendet werden. Das Herstellverfahren läuft ferner über eine entsprechende zentrale elektronische Steuerung weitgehend automatisch ab.

### Bezugsziffernliste

- 1: Trägerschicht
- 2: Partikel
- 3: Hilfsschicht
- 3': Hilfsschichtbahn
- 3": Hilfsschichtbahn
- 4: Folie
- 4': Folienbahn
- 4": Folienplatte
- 5: Folie
- 5': Folienbahn
- 5": Folienplatte
- 6: Rolle
- 6': Rolle
- 7: Band
- 8: Streueinrichtung
- 9: Rolle
- 10: Rolle
- 11: Auffangbehälter
- 12: Rolle
- 14: Doppelbandpresse
- 15: Rolle
- 16: Transportband
- 17: Rollen- bzw. Walzenpaar
- 18: Hilfseinrichtung
- 19: Generator
- 20: Stützschicht

## Patentansprüche

1. Verfahren zur Herstellung einer Elektrode, welche elektrisch leitfähige Partikel (2), insbesondere dotierte Diamantpartikel oder dotierte TiO₂-Kristallpartikel aufweist, die einlagig in einer Kunststoff-Trägerschicht (1) eingebettet sind und beidseitig dieser Schicht herausragen, wobei eine erste und eine zweite Hilfsschicht (3') aus einem weichen, nachgiebigen Material mit Folien (4', 5') aus Kunststoff und ggf. zumindest einer Stützschicht (20) kontinuierlich zu einem mehrlagigen Material zusammengefügt werden, und wobei der Kunststoff der Folien (4', 5') aufgeschmolzen wird und dabei die Partikel (2) an beiden Außenseiten der aus den Folien (4', 5') entstandenen Trägerschicht (1) freigelegt werden,
**dadurch gekennzeichnet,**
**dass** von Rollen abgewickelte Hilfsschichtbahnen (3') und Folienbahnen (4', 5') jeweils über eine Rolle (9) geführt und zusammengefügt werden, wobei beide Folienbahnen (4', 5') auf den Hilfsschichtbahnen (3') positioniert werden, die eine Folienbahn (4') oberhalb der anderen,
wobei auf die obere Folienbahn (4') über eine Streueinrichtung (8) die Partikel (2) anhaftend aufgebracht werden,
wobei beim Transport der oberen Folienbahn (4') über weitere Rollen (10, 12) die Folienbahn (4') in eine zur Hilfsschichtbahn (3') umgekehrte Lage gebracht und beim Transport der oberen Folienbahn (4') über die eine weitere Rolle (10) die überschüssigen Partikel (2) in einen Auffangbehälter (11) fallen,
und wobei anschließend diese Folienbahn (4') mit der zweiten mit einer Hilfsschicht (3') zusammengefügten Folienbahn (5') zusammengeführt wird und das mehrlagige Material in eine Doppelbandpresse (14) oder einen Kalander transportiert und dort Druck und Wärme ausgesetzt wird, und wobei nach dem Austritt aus der Doppelbandpresse (14) oder dem Kalander die Hilfsschichten (3') entfernt werden und der abgekühlte Materialverbund zu Elektroden geschnitten wird.

2. Verfahren nach Anspruch 1, **dadurch gekennzeichnet, dass** zur Haftung der Partikel (2) auf der oberen Folienbahn (4') die Partikel (2) und die Folienbahn (4') elektrostatisch aufgeladen werden.

3. Verfahren nach Anspruch 1, **dadurch gekennzeichnet, dass** zur Haftung der Partikel (2) auf der Folienbahn (4') die Folienbahn (4') mit einer Klebeschicht versehen wird.

4. Verfahren nach einem der Ansprüche 1 bis 3, **dadurch gekennzeichnet, dass** die zumindest eine Stützschicht (20) ein Gitter oder ein Gewebe ist und zwischen zumindest einer der Folienbahnen (4', 5') und der dieser zugehörigen Hilfsschicht (3') oder an der Außenseite zumindest einer der Hilfsschichten (3') oder zwischen den Folienbahnen (4', 5') positioniert wird.

5. Verfahren nach einem der Ansprüche 1 bis 4, **dadurch gekennzeichnet, dass** die Partikel (2) Diamantpartikel mit Korngrößen zwischen 160 µm und 350 µm oder TiO₂ - Kristallpartikel mit Korngrößen zwischen 300 µm und 5mm, insbesondere bis zu 2 mm, sind.

6. Verfahren nach einem der Ansprüche 1 bis 5, **dadurch gekennzeichnet, dass** die Folienbahnen (4, 5) eine Stärke zwischen 12,5 µm und 250 µm aufweisen.

7. Verfahren nach einem der Ansprüche 1 bis 6, **dadurch gekennzeichnet, dass** das Verhältnis der durchschnittlichen Korngrößen der eingesetzten Partikel (2) zur Summe der Stärken der verwendeten Folienbahnen (4', 5') zwischen 3,9 und 9,0, insbesondere bis zu 6,0, beträgt.

## Claims

1. Process for producing an electrode having electrically conductive particles (2), in particular doped diamond particles or doped TiO2 crystal particles which are embedded in one layer in a plastics carrier layer (1) and protrude from said layer on both sides, wherein a first and a second auxiliary layer (3') from a soft yielding material with films (4', 5') from plastic and, if applicable, at least one support layer (20), are continuously joined into a multilayer material, and wherein the plastic of the films (4', 5') is melted and the particles (2) on both outer sides are thereby exposed to the carrier layer (1) created from the films (4', 5'),
**characterized in that**,
auxiliary layer webs (3') and film webs (4', 5') unreeled from rolls are in each case guided over a roller (9) and joined, with both film webs (4', 5') being positioned on the auxiliary layer webs (3'), the one film web (4') above the other,
with the particles (2) being adhesively applied on the top film web (4') by means of a spreading device (8),
with, while the top film web (4') is being conveyed over further rollers (10, 12), the film web (4') being brought into a reverse position to the auxiliary layer web (3') and with, while the top film web (4') is conveyed over the one further roller (10), the excess particles (2) falling into a collecting vessel (11), and with said film web (4') then being brought together with the second film web (5') joined to an auxiliary layer (3') and the multilayer material being conveyed into a double-belt press (14) or a calendar where it is subjected to pressure and heat, and with, after they exit the double-belt press (14) or calendar, the auxiliary layers (3') being removed and the cooled composite material cut into electrodes.

2. Process according to claim 1, **characterized in that** for adhering the particles (2) to the top film web (4') the particles (2) and the film web (4') are electrostatically charged.

3. Process according to claim 1, **characterized in that** for adhering the particles (2) to the film web (4') the film web (4') is provided with an adhesive layer.

4. Process according to any of claims 1 to 3, **characterized in that** the at least one support layer (20) is a mesh or woven fabric and is positioned between at least one of the film webs (4', 5') and the therewith associated auxiliary layer (3') or on the outside of at least one of the auxiliary layers (3') or between the film webs (4', 5').

5. Process according to any of claims 1 to 4, **characterized in that** the particles (2) are diamond particles with grain sizes between 160 µm and 350 µm or TiO2 crystal particles with grain sizes between 300 µm and 5mm, in particular up to 2 mm.

6. Process according to any of claims 1 to 5, **characterized in that** the film webs (4, 5) are between 12.5 µm and 250 µm thick.

7. Process according to any of claims 1 to 6, **characterized in that** the ratio of the average corn sizes of the particles (2) used to the sum of the thicknesses of the film webs (4', 5') used is between 3.9 and 9.0, in particular up to 6.0.

## Revendications

1. Procédé de fabrication d'une électrode comportant des particules électriquement conductrices (2), notamment des particules de diamant dopées ou des particules cristallines TiO2 dopées qui sont incorporées à monocouche dans une couche de support en plastique (1) et qui dépassent de cette couche sur les deux côtés, une première et une deuxième couche auxiliaire (3') d'un matériau doux et élastique étant assemblées en continu à un matériau à couches multiples à l'aide des feuilles (4', 5') en plastique et le cas échéant d'au moins une couche de support (20), la matière plastique des feuilles (4', 5') étant fondue et les particules (2) étant libérées sur les deux faces extérieures de la couche de support (1) formée par les feuilles (4', 5'),
**caractérisé en ce que**
les bandes de couche auxiliaire (3') et bandes de feuille (4', 5') déroulées de bobines sont chacune guidée sur un rouleau (9) et assemblées, les deux bandes de feuille (4', 5') étant positionnées sur les bandes de couche auxiliaire (3'), à savoir l'une des bandes de feuille (4') au-dessus de l'autre,
les particules (2) étant appliquées par adhésif sur la bande de feuille supérieure (4') au moyen d'un dispositif d'épandage (8),
la bande de feuille (4') étant mise dans une position inversée à la bande de couche auxiliaire (3') pour le transport de la bande de feuille supérieure (4') par des rouleaux supplémentaires (10, 12) et les particules excédentaires (2) tombant dans un bac de récupération (11) lors du transport de la bande de feuille supérieure (4') par un rouleau supplémentaire (10), cette bande de feuille (4') ensuite étant réunie avec la deuxième bande de feuille (5') assemblée avec une couche auxiliaire (3') et le matériau à couches multiples étant transporté vers une presse à double bande (14) ou un calandre où il est mis sous pression et chaleur, les couches auxiliaires (3') étant retirées après leur sortie de la presse à double bande (14) ou du calandre et le matériau composite refroidi étant découpé pour former une électrode.

2. Procédé selon la revendication 1, **caractérisé en ce que** les particules (2) et la bande de feuille (4') sont chargées électrostatiquement pour assurer l'adhérence des particules (2) à la bande de feuille supérieure (4').

3. Procédé selon la revendication 1, **caractérisé en ce que** la bande de feuille (4') est pourvue d'une couche adhésive (2) pour assurer l'adhérence des particules à la bande de feuille (4').

4. Procédé selon l'une quelconque des revendications 1 à 3, **caractérisé en ce que** la couche de support est au moins une couche d'appui (20), une grille ou un tissu et est positionnée entre au moins l'une des bandes de feuille (4', 5') et la couche auxiliaire (3') associée à cette couche de support ou sur la face extérieure d'au moins l'une des couches auxiliaires (3') ou encore entre les bandes de feuille (4', 5').

5. Procédé selon l'une quelconque des revendications 1 à 4, **caractérisé en ce que** les particules (2) sont des particules de diamant avec des tailles de 160 µm à 350 µm ou des particules cristallines TiO2 avec des tailles de 300 µm à 5mm, notamment jusqu'à 2 mm.

6. Procédé selon l'une quelconque des revendications 1 à 5, **caractérisé en ce que** les bandes de feuille (4, 5) présentent une épaisseur de 12,5 µm à 250 µm.

7. Procédé selon l'une quelconque des revendications 1 à 6, **caractérisé en ce que** le rapport des tailles moyennes des particules utilisées (2) à la somme des épaisseurs des bandes de feuille utilisées (4', 5') est de 3,9 à 9,0, notamment de jusqu'à 6,0.
